# EUROPEAN PATENT APPLICATION

(11) **EP 4 129 059 A1**
(43) Date of publication of application: **08.02.2023**
(21) Application number: 21190217.6
(22) Date of filing: 06.08.2021
(51) Int. Cl.: A01M 1/10, A01M 1/02, A01M 1/20

(54) **FLY KILLING BAIT STATION**

(71) Applicant: Strauss, John Laurence, 1295 Mies (CH)
(72) Inventor: Strauss, John Laurence, 1295 Mies (CH)
(74) Representative: Schütte, Gearoid

(57) **Abstract**

A fly killing bait station (1) has a housing (2) with a square rear panel (3) which forms a rear side wall of the housing (2). The rear panel (3) is at least partially formed of a translucent or transparent material to form a window (10) on the rear side wall of the housing (2). An outer surface of the rear panel (3) has mounted thereon two spaced-apart adhesive pads (4) with peel-away covers such that the outer face of the rear panel (3) forms an attachment face for mounting the fly killing bait station (1) on an inside face of a window in a building in use which forms a support surface for the fly killing bait station (1). The housing (2) has an inlet opening (5) to allow flies enter the housing (2) for access to a fly attractant bait, such as honey, with insecticide contained within the housing (2). In use, sunlight streaming through the window (10) gently heats the fly attractant bait causing some of the attractant bait to volatilize and disperse out through the inlet opening (5) to lure flies, which follow the attractant bait vapour trail, back to the fly killing bait station (1).

## Description

### Introduction

This invention relates to a device for the control of household flies indoors, and in particular to a bait station containing a food bait and insecticide specifically designed to attract and kill flies.

### Background of the Invention

Various fly killing products are available which usually comprise a sticky surface for trapping the flies and in some instances an attractant in the form of a chemical, pheromone or other, or food substance or colour either individually or in combination and may include insecticides. These devices are successful to varying degrees. However, many conventional devices are very unsightly because dead flies are visible, or can degrade due to heat from sunlight.

The present invention is directed towards providing an improved fly control product which overcomes at least some of the drawbacks with conventional fly killing devices.

### Summary of the Invention

According to the invention there is provided a fly killing bait station, comprising:
a housing;
the housing having an attachment face for mounting the housing on a support surface,
the attachment face at least partially coated with an adhesive for attachment to the support surface,
a translucent window on a side wall of the housing;
the housing having an inlet opening to allow through passage of flies into the housing; and
a fly attractant bait with insecticide contained within the housing.

In one embodiment of the invention the attachment face is on a rear side wall of the housing, and the translucent window is on the rear side wall of the housing.

In another embodiment the translucent window forms at least a portion of the rear side wall of the housing.

In another embodiment the translucent window is a transparent window.

In another embodiment the inlet opening is provided in a front side wall of the housing.

In another embodiment the inlet opening is mounted adjacent an upper end of the front side wall of the housing. The inlet opening is high enough on the housing to ensure the attractant bait is retained within the housing during use.

In another embodiment the inlet opening has an arcuate shape. Other shapes are also possible for the inlet opening, providing the inlet opening allows flies to enter the housing.

In another embodiment the fly attractant bait comprises an attractant such as a honey bait containing an insecticide.

In another embodiment, the fly attractant bait includes a second or multiple attractant such as monosodium glutamate.

In another embodiment the insecticide comprises one or more insecticides which are not repellent to flies.

In another embodiment the insecticide comprises a pyrethroid or neonicotinoide.

In another embodiment the insecticide comprises 1R-transphenothrin and prallethrin.

In another embodiment the attachment face has two or more spaced-apart adhesive pads each with a peel-away cover, the adhesive pads together forming the adhesive for attachment of the housing to a support surface. Conveniently double-sided adhesive tape can be used for example. Various other adhesive arrangements are possible. For example, a layer of adhesive may be directly applied to the attachment face, covering at least a portion of the attachment face, covered by a peel-away cover prior to use.

In another embodiment, portion of the housing is camouflaged to obscure dead flies collected within the housing.

In another embodiment, the camouflaged portion comprises a matrix of spaced-apart dots covering a lower portion of the rear side wall of the housing. Instead of the matrix of dots, a collection of spaced-apart designs in various shapes could be provided.

In another embodiment the housing is formed from a multi-layered plastics film material.

In another embodiment the housing, other than the window, is opaque. Conveniently the housing comprises a white plastics material, or other colour of plastics material to match the frame of the window on which the fly killing bait station is mounted in use.

### Brief Description of the Drawings

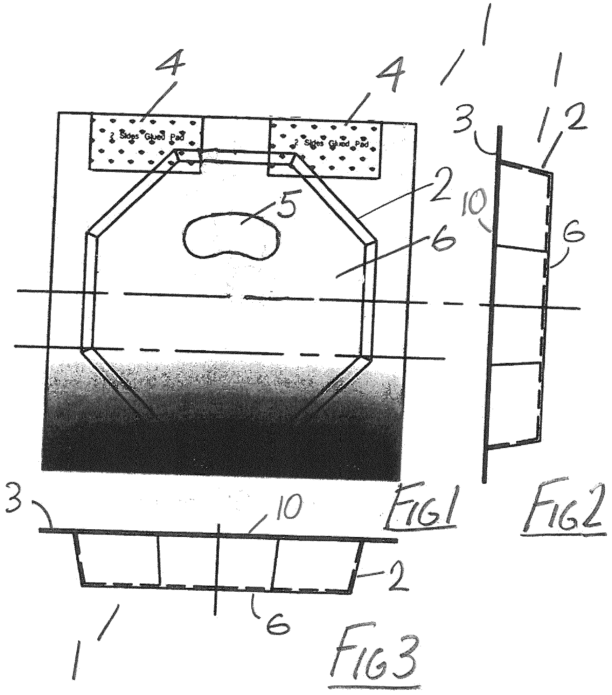

The invention will be more clearly understood from the following description of some embodiments thereof, given by way of example only, with reference to the accompanying drawings in which
Fig. 1 is a front elevational view of a fly killing bait station according to the invention;
Fig. 2 is a side elevational view of the fly killing bait station;
Fig. 3 is a plan view of the fly killing bait station; and
Fig. 4 is a rear elevational view of the fly killing bait station.

### Detailed Description of the Preferred Embodiments

Referring to the drawings, there is illustrated a fly killing bait station according to the invention, indicated generally by the reference numeral 1. The fly killing bait station 1 has a housing 2 with a square rear panel 3 which forms a rear side wall of the housing 2 and may project outwardly of a periphery of the housing 2 as shown in the drawing. This rear panel 3 is formed of a translucent or transparent material to form a window 10 on a rear side wall of the housing 2. An outer surface of the rear panel 3 has mounted thereon two spaced-apart adhesive pads 4 with a peel-away cover such that the outer face of the rear panel 3 forms an attachment face for mounting the fly killing bait station 1 on a window in a building in use which forms a support surface for the fly killing bait station 1 .

An arcuate inlet opening 5 in a front side wall 6 of the housing 2 provides access to an interior of the housing 2 for flies. A fly attractant bait containing an insecticide is mounted within an interior of the housing 2. The fly attractant bait may comprise honey, and optionally additional attractants, and contain 1R-transphenothrin and prallethrin insecticide, or other insecticides known to be effective and non-repellent to flies.

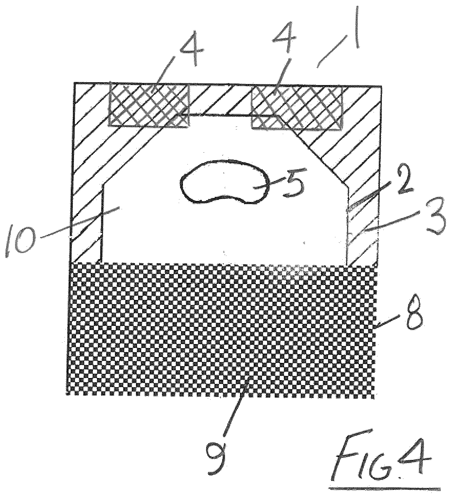

It will be noted that the rear panel 3 comprises a translucent or transparent film which forms the window 10 across at least portion of the rear panel 3 to allow sunlight passing through the window upon which the fly killing bait station 1 is mounted to enter the housing 2. The film forming the rear panel 3 may be printed to camouflage flies that may die within the housing 2. In this regard, Fig. 4 shows a rear face of the panel 3, a lower portion 8 of which is printed with a matrix of spaced-apart black dots 9 to camouflage and obscure dead flies collected within the housing 2. Other camouflage designs might be used instead.

The housing 2 can be any desired shape. A hexagonal housing 2 is shown in the drawings, however other shapes are possible also. Preferably the rear panel 3 is square or rectangular in order to fit in a corner of a window pane upon which the fly killing bait station 1 is mounted in use.

Conveniently the housing 2 is a white or cream colour to blend with most popular white window frames in order to be discreet and unobtrusive in use. Other colours might be used to match other frames of different colour.

The fly killing bait station 1 can be made from imprinted, multi-layered plastics film material. A peel-off front cover sticker label may be mounted across the front side wall 6 of the housing 2 for packaging prior to use to at least cover portion of the front side wall 6 and close the inlet opening 5.

In use, the fly killing bait station 1 is removed from it's packaging box. The front cover sticker label is peeled away from the face of the front side wall 6, thus exposing the inlet opening 5. After peeling away a silicone paper sheet covering the adhesive pads 4 on the rear face of the housing 2, that is the exposed outer face of the rear panel 3, the rear panel 3 is mounted in a corner of a window frame with the inlet opening 5 at a top of the fly killing bait station 1. Sunlight streaming in through the window during the day enters the housing 2 through the window 10 in the rear panel 3 and gently heats the honey bait, causing an increase in the fragrance emitted from the bait formulation which disperses outwardly through the inlet opening 5 to attract flies which follow the honey scented vapour trail back to the fly killing bait station 1, entering through the inlet opening 5 to access the honey within the housing 2 and thus also ingesting insecticide.

The honey provides an attractant for flies and masks the insecticide. More than one attractant might be provided. For example, monosodium glutamate may be added to the honey. This is another attractant for flies and also helps mask the insecticide. The attractant, or one of the attractants, might not be food, for example, it could be a pheromone or a colour which is a fly attractant. The non-food attractants could be used separately or in combination with a food attractant.

Various insecticides are possible, for example, one or two pyrethroids or one or two neonicotinoides or combinations thereof might be used. The insecticide should be strong enough to kill flies, but not strong enough to repel flies, that is capable of being masked by the attractant.

None of the used insecticides should have a significant repellency effect to house flies. Any insecticide used should provide a quick knock-down and killing of flies.

A front face of the housing 2, which faces inwardly into the room, is opaque and preferably is coloured to match the frame of the window so that it does not stand out. It can be of any suitable colour, white probably being the most common colour for window frames.

The window 10 formed by the rear panel 3 allows sunlight to be directed onto the fly attractant bait within the housing 2. The fly attractant bait is such that when sunlight is applied to the bait it causes volatilisation of the bait to lure flies into the housing 2.

In this specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A fly killing bait station (1), comprising:
a housing (2);
the housing (2) having an attachment face (3) for mounting the housing (2) on a support surface, the attachment face (3) at least partially coated with an adhesive (4) for attachment to the support surface;
a translucent window (10) on a side wall of the housing (2);
the housing (2) having an inlet opening (5) to allow through passage of flies into the housing (2); and
a fly attractant bait with insecticide contained within the housing (2).

2. The fly killing bait station (1) as claimed in claim 1, wherein the attachment face (3) is on a rear side wall of the housing (2), and the translucent window (10) is on the rear side wall of the housing (2).

3. The fly killing bait station (1) as claimed in claim 2, wherein the translucent window (10) forms at least a portion of the rear side wall of the housing (2).

4. The fly killing bait station (1) as claimed in any one of the preceding claims, wherein the translucent window (3) is a transparent window.

5. The fly killing bait station (1) as claimed in any one of the preceding claims, wherein the inlet opening (5) is provided in a front side wall (6) of the housing (2).

6. The fly killing bait station (1) as claimed in any one of the preceding claims, wherein the inlet opening (5) is mounted adjacent an upper end of the front side wall (6) of the housing (2).

7. The fly killing bait station (1) as claimed in any one of the preceding claims, wherein the inlet opening (5) has an arcuate shape.

8. The fly killing bait station (1) as claimed in any one of the preceding claims, wherein the fly attractant bait comprises a honey bait containing an insecticide.

9. The fly killing bait station (1) as claimed in any one of the preceding claims wherein the insecticide comprises a pyrethroid or neonicotinoide.

10. The fly killing bait station (1) as claimed in any one of the preceding claims, wherein the insecticide comprises 1R-transphenothrin and prallethrin.

11. The fly killing bait station (1) as claimed in any one of the preceding claims, wherein the attachment face (3) has two or more spaced-apart adhesive pads (4) each with a peel-away cover forming the adhesive on the attachment face (3) for attaching to the support surface.

12. The fly killing bait station (1) as claimed in any one of the preceding claims, wherein portion of the housing (2) is camouflaged to obscure dead flies collected within the housing (2).

13. The fly killing bait station (1) as claimed in claim 12, wherein the camouflaged portion comprises a matrix of spaced-apart dots (9) or collection of spaced-apart designs covering a lower portion of the rear side wall (9) of the housing (2).

14. The fly killing bait station (1) as claimed in any one of the preceding claims wherein the housing, other than the window, is opaque.
